(19) **Europäisches Patentamt / European Patent Office / Office européen des brevets**

(11) **EP 3 038 311 A1**

(12) **EUROPEAN PATENT APPLICATION**
published in accordance with Art. 153(4) EPC

(43) Date of publication:
**29.06.2016 Bulletin 2016/26**

(21) Application number: **14845744.3**

(22) Date of filing: **17.09.2014**

(51) Int Cl.:
**H04L 27/26** (2006.01)     **H04L 25/03** (2006.01)

(86) International application number:
**PCT/CN2014/086680**

(87) International publication number:
**WO 2015/039596 (26.03.2015 Gazette 2015/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.09.2013 CN 201310426076**

(71) Applicant: **Huawei Technologies Co., Ltd.**
**Longgang District**
**Shenzhen, Guangdong 518129 (CN)**

(72) Inventors:
• **WU, Yiling**
  **Shenzhen**
  **Guangdong 518129 (CN)**
• **YU, Guangwei**
  **Shenzhen**
  **Guangdong 518129 (CN)**
• **JI, Tong**
  **Shenzhen**
  **Guangdong 518129 (CN)**
• **ZHANG, Weiliang**
  **Shenzhen**
  **Guangdong 518129 (CN)**

(74) Representative: **Pfenning, Meinig & Partner mbB**
**Patent- und Rechtsanwälte**
**Joachimsthaler Straße 12**
**10719 Berlin (DE)**

(54) **TRANSMITTING END, RECEIVING END, AND COEXISTENCE METHOD FOR SINGLE CARRIER SYSTEM AND MULTI-CARRIER SYSTEM**

(57)     The present invention provides a transmit end, a receive end, and a method for coexistence of a single carrier system and a multicarrier system. A signal transmitting method for coexistence of a single carrier system and a multicarrier system includes: modulating, by a transmit end, a first frequency band that corresponds to a first signal to be transmitted by the single carrier system onto a second frequency band that corresponds to a second signal to be transmitted by the multicarrier system, to obtain a transmit signal including at least the first signal and/or the second signal, where a spacing between a center frequency of a first subchannel and a center frequency of a second subchannel is an integer multiple of a spacing between two adjacent second subchannels, and a signal bandwidth that corresponds to the first subchannel is less than or equal to a signal bandwidth that corresponds to the second subchannel; and transmitting the transmit signal to a receive end, so that the receive end completes reception of the first signal and the second signal. By using the foregoing method, the present invention can reduce mutual interference between the single carrier system and the multicarrier system during signal transmission, ensure that spectrum resources are shared between heterogeneous systems, and improve spectrum utilization.

FIG. 6

## Description

### CROSS-REFERENCE TO RELATED APPLICATIONS

This application claims priority to Chinese Patent Application No. 201310426076.6, filed with the Chinese Patent Office on September 17, 2013 and entitled "TRANSMIT END, RECEIVE END, AND METHOD FOR COEXISTENCE OF SINGLE CARRIER SYSTEM AND MULTICARRIER SYSTEM", which is incorporated herein by reference in its entirety.

### TECHNICAL FIELD

The present invention relates to the field of communications technologies, and in particular, to a transmit end, a receive end, and a method for coexistence of a single carrier system and a multicarrier system.

### BACKGROUND

At present, an increasing demand on communications services is straining spectrum resources worldwide. Because the spectrum resources are limited, how to improve spectrum utilization and to efficiently use existing spectra has become an important means of operators to enhance competitiveness.

In the prior art, signal transmission by means of coexistence of a single carrier system and a multicarrier system has been widely used. A system using only one carrier frequency or one carrier for signal transmission is referred to as a single carrier system (Single Carrier System). A system using multiple carrier frequencies or multiple carriers for signal transmission is referred to as a multicarrier system (Multi Carrier System). Because the single carrier system has a relatively narrow signal bandwidth and a relatively high spectrum density, in practical signal transmission, a multicarrier signal is merely equivalent to relatively low noise that is added to bandwidth allocated to a single carrier signal, and has extremely low interference on the single carrier system. However, compared with the multicarrier signal, the single carrier signal is a narrowband interference signal, and extremely easily causes spectrum spreading on a receive end of the multicarrier signal, thereby seriously interfering with transmission of the multicarrier signal, reducing performance of the multicarrier system, and affecting spectrum utilization.

### SUMMARY

In view of this, embodiments of the present invention provide a transmit end, a receive end, and a method for coexistence of a single carrier system and a multicarrier system, to reduce mutual interference between the single carrier system and the multicarrier system during signal transmission, ensure that spectrum resources are shared between heterogeneous systems, and improve spectrum utilization.

A first aspect provides a signal transmitting method for coexistence of a single carrier system and a multicarrier system, including: modulating, by a transmit end, a first frequency band that corresponds to a first signal to be transmitted by the single carrier system onto a second frequency band that corresponds to a second signal to be transmitted by the multicarrier system, to obtain a transmit signal, where the transmit signal includes at least the first signal and/or the second signal, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and transmitting the transmit signal to a receive end, so that the receive end completes reception of the first signal and the second signal.

With reference to an implementation manner of the first aspect, or a first possible implementation manner, the method includes: setting a guard interval between the first frequency band and the second frequency band.

With reference to the implementation manner of the first aspect, in a second possible implementation manner, if the transmit end is a base station and the receive end is a mobile phone, the modulating, by a transmit end, a first frequency band that corresponds to a first signal to be transmitted by the single carrier system onto a second frequency band that corresponds to a second signal to be transmitted by the multicarrier system, to obtain a transmit signal includes: sequentially performing, by the transmit end, channel coding, constellation diagram mapping, multi-rate filtering, and up-conversion on communication data to be transmitted, to acquire the first frequency band that corresponds to the first signal to be transmitted by the single carrier system, modulating the first frequency band onto the second frequency band that corresponds to the second signal to be transmitted by the multicarrier system, to obtain a coexistence frequency band; and performing digital-to-analog conversion on a digital signal that corresponds to the coexistence frequency band, to obtain the transmit signal.

With reference to the implementation manner of the first aspect, in a third possible implementation manner, if the transmit end is a mobile phone and the receive end is a base station, the modulating, by a transmit end, a first frequency band that corresponds to a first signal to be transmitted by the single carrier system onto a second frequency band that corresponds to a second signal to be transmitted by the multicarrier system, to obtain a transmit signal includes: separately performing, by the transmit end, channel coding, constellation diagram mapping, and digital-to-analog conversion sequentially on communication data to be sent by the single carrier system and communication data to be sent by the multicarrier system, performing up-conversion on the first signal to be transmitted by the single carrier system and the second signal to be transmitted by the multicarrier system, where digital-to-analog conversion has been performed on the first signal and the second signal, to acquire the first frequency band that corresponds to the first signal, and modulating the first frequency band onto the second frequency band that corresponds to the second signal, to obtain a coexistence frequency band and the transmit signal that corresponds to the coexistence frequency band.

With reference to the implementation manner of the first aspect, in a fourth possible implementation manner, the single carrier system is a GSM system, and the multicarrier system is an OFDM system.

A second aspect provides a transmit end, including: a processing unit, configured to modulate a first frequency band that corresponds to a first signal to be transmitted by a single carrier system onto a second frequency band that corresponds to a second signal to be transmitted by a multicarrier system, to obtain a transmit signal, where the transmit signal includes at least the first signal and/or the second signal, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and a sending unit, configured to receive the transmit signal obtained by the processing unit, and transmit the transmit signal to a receive end, so that the receive end completes reception of the first signal and the second signal.

With reference to an implementation manner of the second aspect, in a first possible implementation manner, the processing unit sets a guard interval between the first frequency band and the second frequency band.

With reference to the implementation manner of the second aspect, in a second possible implementation manner, if the transmit end is a base station and the receive end is a mobile phone, the processing unit is further configured to sequentially perform channel coding, constellation diagram mapping, multi-rate filtering, and up-conversion on communication data to be sent, to acquire the first frequency band that corresponds to the first signal to be transmitted by the single carrier system, modulate the first frequency band onto the second frequency band that corresponds to the second signal, to obtain a coexistence frequency band, and perform digital-to-analog conversion on a signal that corresponds to the coexistence frequency band, to obtain the transmit signal.

With reference to the implementation manner of the second aspect, in a third possible implementation manner, if the transmit end is a mobile phone and the receive end is a base station, the processing unit is further configured to separately perform channel coding, constellation diagram mapping, and digital-to-analog conversion sequentially on communication data to be sent by the single carrier system and communication data to be sent by the multicarrier system, perform up-conversion on the first signal and the second signal on which digital-to-analog conversion has been performed, to acquire the first frequency band that corresponds to the first signal to be transmitted by the single carrier system, and modulate the first frequency band onto the second frequency band that corresponds to the second signal to be transmitted by the multicarrier system, to obtain a coexistence frequency band and the transmit signal that corresponds to the coexistence frequency band.

With reference to the implementation manner of the second aspect, in a fourth possible implementation manner, the single carrier system is a GSM system, and the multicarrier system is an OFDM system.

A third aspect provides a signal receiving method for coexistence of a single carrier system and a multicarrier system, including: receiving, by a receive end, a transmit signal transmitted by a transmit end, where the transmit signal includes at least a first signal and/or a second signal, a first frequency band that corresponds to the first signal transmitted by the single carrier system is modulated onto a second frequency band that corresponds to the second signal transmitted by the multicarrier system, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and completing, by the receive end, reception of the first signal transmitted by the single carrier system and the second signal transmitted by the multicarrier system.

With reference to an implementation manner of the third aspect, in a first possible implementation manner, after the receiving, by a receive end, a transmit signal transmitted by a transmit end, the method includes: performing analog-to-digital conversion on the transmit signal, to obtain a corresponding digital signal; performing down-conversion on the digital signal, to demodulate the first frequency band that corresponds to the first signal and the second frequency band that corresponds to the second signal, and to acquire the first signal transmitted by the single carrier system and the second signal transmitted by the multicarrier system; and separately performing constellation diagram parsing and channel decoding sequentially on the first signal and the second signal, to obtain corresponding communication data.

With reference to the implementation manner of the third aspect, in a second possible implementation manner, the single carrier system is a GSM system, the multicarrier system is an OFDM system, and the transmit end is a mobile phone and the receive end is a base station, or the transmit end is a base station and the receive end is a mobile phone.

A fourth aspect provides a receive end, including: a receiving unit, configured to receive a transmit signal transmitted by a transmit end, where the transmit signal includes at least a first signal and/or a second signal, a first frequency band that corresponds to the first signal transmitted by a single carrier system is modulated onto a second frequency band that corresponds to the second signal transmitted by a multicarrier system, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and a processing unit, configured to complete, according to the transmit signal received by the receiving unit, reception of the first signal transmitted by the single carrier system and the second signal transmitted by the multicarrier system.

With reference to an implementation manner of the fourth aspect, in a first possible implementation manner, the processing unit is further configured to perform analog-to-digital conversion on the transmit signal, to obtain a corresponding digital signal, and perform down-conversion on the digital signal, to demodulate the first frequency band that corresponds to the first signal and the first frequency band that corresponds to the second signal, to acquire the first signal transmitted by the single carrier system and the second signal transmitted by the multicarrier system; and the processing unit is further configured to separately perform constellation diagram parsing and channel decoding sequentially on the first signal and the second signal, to obtain corresponding communication data.

With reference to the implementation manner of the fourth aspect, in a second possible implementation manner, the single carrier system is a GSM system, the multicarrier system is an OFDM system, and the transmit end is a mobile phone and the receive end is a base station, or the transmit end is a base station and the receive end is a mobile phone.

By using the foregoing solutions, the present invention achieves the following beneficial effects: The present invention designs that a transmit end modulates a first frequency band that corresponds to a first signal to be transmitted by a single carrier system onto a second frequency band that corresponds to a second signal to be transmitted by a multicarrier system, to obtain a transmit signal including at least the first signal and/or the second signal, and transmits the transmit signal to a receive end, so that the receive end completes reception of the first signal and the second signal. The first signal is carried by multiple first subchannels, and the second signal is carried by multiple second subchannels. A spacing between a center frequency of the first subchannel and a center frequency of the second subchannel is an integer multiple of a spacing between two adjacent second subchannels, so that the first signal and the second signal have close frequencies during reception and low mutual interference; in addition, a signal bandwidth that corresponds to the first subchannel is less than or equal to a signal bandwidth that corresponds to the second subchannel, so that the single carrier system is merely relatively low noise compared with the multicarrier system, and has extremely low interference. Based on the above, the present invention can reduce the mutual interference between the single carrier system and the multicarrier system during signal transmission, ensure that spectrum resources are shared between heterogeneous systems, and improve spectrum utilization.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts. In the accompanying drawings:

FIG. 1 is a flowchart of a signal transmitting method for coexistence of a single carrier system and a multicarrier system according to a first embodiment of the present invention;
FIG. 2 is a diagram of a signal transmission architecture in which a single carrier system and a multicarrier system coexist according to the present invention;
FIG. 3 is a schematic diagram of a coexistence frequency band when a single carrier system and a multicarrier system coexist according to a first embodiment of the present invention;
FIG. 4 is schematic diagram of a coexistence frequency band when a single carrier system and a multicarrier system coexist according to a second embodiment of the present invention;
FIG. 5 is a flowchart of a signal receiving method for coexistence of a single carrier system and a multicarrier system according to a first embodiment of the present invention;

FIG. 6 is a flowchart of a signal transmission method for coexistence of a single carrier system and a multicarrier system according to a preferable embodiment of the present invention;

FIG. 7 is a functional block diagram of a transmit end and a receive end according to a preferable embodiment of the present invention; and

FIG. 8 is a schematic diagram of hardware of a transmit end and a receive end according to a preferable embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

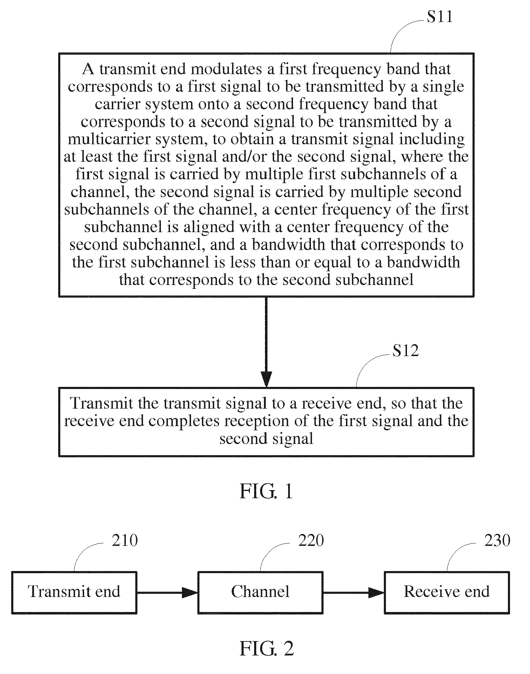

The present invention provides a signal transmitting method for coexistence of a single carrier system and a multicarrier system. Reference may be made to FIG. 1, a flowchart of a signal transmitting method for coexistence of a single carrier system and a multicarrier system according to a first embodiment of the present invention. This embodiment is based on a signal transmission architecture shown in FIG. 2. As shown in FIG. 1, the signal transmitting method of this embodiment includes:

Step S11: A transmit end 210 modulates a first frequency band that corresponds to a first signal to be transmitted by a single carrier system onto a second frequency band that corresponds to a second signal to be transmitted by a multicarrier system, to obtain a transmit signal including at least the first signal and/or the second signal, where the first signal is carried by multiple first subchannels of a channel 220, the second signal is carried by multiple second subchannels of the channel 220, a center frequency of the first subchannel is aligned with a center frequency of the second subchannel, and a bandwidth that corresponds to the first subchannel is less than or equal to a bandwidth that corresponds to the second subchannel.

In the present invention, that a center frequency of the first subchannel is aligned with a center frequency of the second subchannel is specifically embodied as that a spacing between the center frequency of the first subchannel and the center frequency of the second subchannel is an integer multiple of a spacing between two adjacent second subchannels. In this embodiment, preferably, a spacing between center frequencies of the closest first subchannel and second subchannel that correspond to a joint of the first frequency band and the second frequency band is an integer multiple of a spacing between any two adjacent second subchannels.

Step S 12: Transmit the transmit signal to a receive end 230, so that the receive end 230 completes reception of the first signal and the second signal.

This embodiment may be construed as combining the first signal to be transmitted by the single carrier system and the second signal to be transmitted by the multicarrier system into one signal, thereby implementing coexistence of the single carrier system and the multicarrier system. In addition, a center frequency of the first signal to be transmitted by the single carrier system is set to be aligned with a center frequency of the second signal to be transmitted by the multicarrier system, so that a frequency of the first signal and a frequency of the second signal are extremely close. Interference of the first signal on the second signal is relatively low, and correspondingly, spectrum spreading can be reduced. Further, a bandwidth of the first frequency band that corresponds to the first signal is less than or equal to a bandwidth of the first frequency band that corresponds to the second signal, and a total bandwidth that corresponds to the second signal on the channel is far greater than a total bandwidth that corresponds to the first signal on the channel, so that the first signal is merely relatively low noise compared with the second signal, and has extremely low interference.

The present invention further provides a signal transmitting method of a second embodiment. The second embodiment is described in detail based on the signal transmitting method disclosed in the first embodiment. For convenience of description, that a transmit end 210 is a base station and a receive end 220 is a mobile phone is used as an example.

In step S11 of this embodiment, the transmit end 210 first acquires communication content to be sent by a user, and converts the communication content into communication data including multiple data bits. Subsequently, the transmit end 210 performs channel coding on the communication data by using a built-in hardware device or software program, to ensure that a maximum information rate can be achieved on a channel 220 during transmission of the communication data, and that transmission performance is stable at the maximum information rate.

Then, the transmit end 210 performs constellation diagram mapping on the communication data on which the channel coding has been performed, and performs digital modulation on the communication data. Specifically, the multiple data bits included in the communication data are grouped in the following manner: two or more data bits form one bit group; then, each group is mapped to one constellation point in a constellation diagram by means of QPSK (Quadrature Phase Shift Keying, quadrature phase shift keying), QAM (Quadrature Amplitude Modulation, quadrature amplitude modulation), or another modulation mode. In this case, one constellation point corresponds to one modulation symbol. Therefore, in subsequent transmission, information included in each transmitted modulation symbol is multiple data bits, thereby greatly improving a transmission rate of the communication data.

Then, the transmit end 210 performs multi-rate filtering on the communication data on which the digital modulation has been performed, to improve a radio-frequency signal sampling rate during emission. This step may be implemented by using various types of multi-rate filters in the prior art.

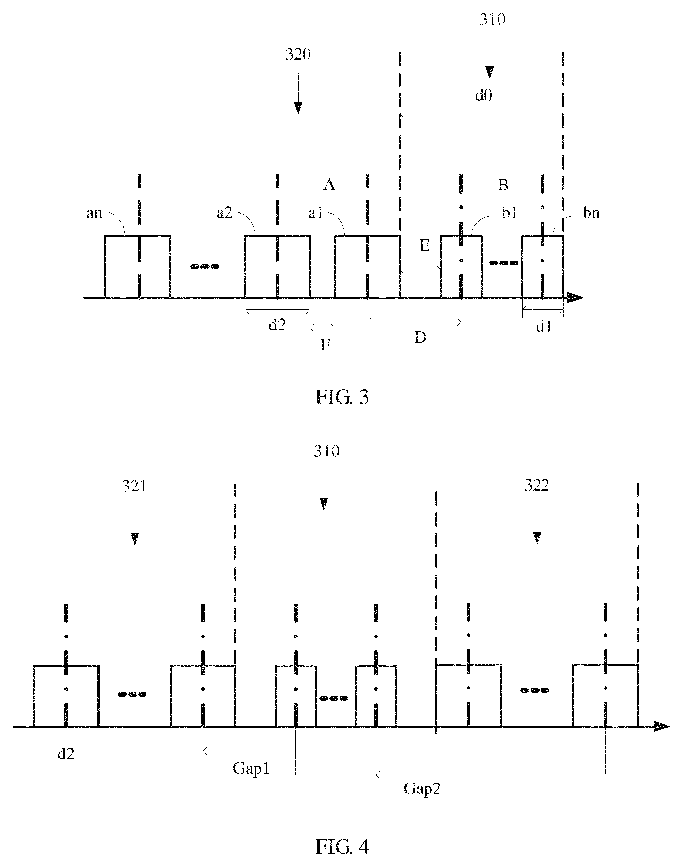

Further, up-conversion is performed on the communication data, to improve a signal frequency during emission and transmission, and satisfy a high frequency needed during radio-frequency emission and transmission over the channel 220. It should be noted that step S11, that is, modulating a first frequency band that corresponds to a first signal to be transmitted by a single carrier system onto a second frequency band that corresponds to a second signal to be transmitted by a multicarrier system, is performed during the up-conversion, to obtain a coexistence frequency band shown in FIG. 3. Finally, digital-to-analog conversion is performed on a digital signal that corresponds to the coexistence frequency band, to obtain an analog transmit signal.

Referring to FIG. 3, the coexistence frequency band includes the first frequency band 310 that corresponds to the first signal to be transmitted by the single carrier system, and the second frequency band 320 that corresponds to the second signal to be transmitted by the multicarrier system. The first frequency band 310 is set on one side of the second frequency band 320. A guard interval D is set between the first frequency band 310 and the second frequency band 320, and a value of D is greater than zero. In addition, the first signal is carried by multiple first subchannels of the channel 220, that is, b1...bn, where the multiple first subchannels have equal or unequal signal bandwidths. The second signal is carried by multiple second subchannels of the channel 220, that is, a1... an, where the multiple second subchannels have equal or unequal signal bandwidths. The first subchannel b1 and the second subchannel a1 are located at a joint of the first frequency band 310 and the second frequency band 320, and a spacing between the first subchannel b1 and the second subchannel a1 is E. A spacing between any two subchannels, for example, a1 and a2, of the second frequency band 320 is F. Center frequencies A of the first subchannels b1...bn are aligned with center frequencies B of the second subchannels a1...an. The spacing E = x*F, where x is a positive integer. A signal bandwidth d1 that corresponds to any first subchannel bn is less than or equal to a signal bandwidth d2 that corresponds to any second subchannel a2, that is, a maximum value of signal bandwidths of the multiple first subchannels b1 ...bn is less than or equal to a minimum value of signal bandwidths of the multiple second subchannels a1...an.

A representative of the single carrier system is a GSM system (Global System for Mobile Communications, Global System for Mobile Communications), and a representative of the multicarrier system is an OFDM system (Orthogonal Frequency Division Multiplexing, orthogonal frequency division multiplexing system). Therefore, for convenience of description, this embodiment uses the GSM system and the OFDM system as examples to define related parameters. It should be understood that the single carrier system and the multicarrier system of the present invention are not limited thereto. This embodiment is specifically as follows:

1) On the coexistence frequency band, a total signal bandwidth d0 allocated to the GSM system is BW-Whole-New whose value is 1.08 MHZ (6 RB).

2) On the coexistence frequency band, a signal bandwidth corresponding to a second subchannel 222 of the OFDM system is BW-Sub-Old whose value is 15 Hz.

3) On the coexistence frequency band, a signal bandwidth corresponding to a first subchannel 221 of the GSM system is BW-Sub-New whose value is 5 Hz.

4) The guard interval D is Gap whose value is 60 Hz.

5) Center frequencies of multiple first subchannels 221 of the GSM system are $F_{sub-carrier}^{sc}(m)$, where

$F_{sub-carrier}^{sc}(m)$ represents a set of center frequencies of m first subchannels 221, $m \in \{1,2,...,K\}$, K is a quantity of corresponding single carriers on the coexistence frequency band, and a value of K is 64.

6) Center frequencies of multiple second subchannels 222 of the OFDM system is $F_{sub-carrier}^{OFDM}(n)$, and

$$F_{sub-carrier}^{OFDM}(n) = F_{center}^{OFDM} + n * BW\_Sub\_Old + F_{shift}^{OFDM}$$ where $F_{sub-carrier}^{OFDM}(n)$ represents a set of center frequencies of n second subchannels 222, $n \in \{1,2,...,M\}$, M is a quantity of subcarriers that the OFDM system includes on the coexistence band, and a value of M is 2048; $F_{center}^{OFDM}$ represents a center frequency of a frequency band that corresponds to the OFDM system, and $F_{shift}^{OFDM}$ represents a spacing between the center frequency $F_{center}^{OFDM}$ and a center frequency of a second subchannel 222 that corresponds to a subcarrier closest to the center frequency $F_{center}^{OFDM}$.

The foregoing example may be construed as dividing a frequency band of 1.08 M from a frequency band of 20 M of the OFDM system, for use by the GSM system. The center frequencies of the first subchannels 221 of the GSM system are aligned with the center frequencies of the second subchannels 222 of the OFDM system, that is, a set of the center frequencies of the first subchannels 221 of the GSM system is a subset of the center frequencies of the second subchannels 222 of the OFDM system, where a specific parameter is expressed as $F_{sub-carrier}^{sc}(m) \in F_{sub-carrier}^{OFDM}(n)$. Therefore, when the receive end 230 receives the first signal transmitted by the GSM system and the second signal transmitted by the OFDM system, frequencies that correspond to the first signal and the second signal are extremely close, and the first signal and the second signal may share a corresponding device that is needed. In addition, setting of the guard interval reduces mutual interference during reception of the first signal and the second signal, that is, interference caused by spectrum spreading can be reduced. In addition, the signal bandwidth that corresponds to the first subchannel 221 is less than or equal to the signal bandwidth that corresponds to the second subchannel, where a specific parameter is expressed as BW-Sub-New ≤ BW-Sub-Old, so that the single carrier system is merely relatively low noise compared with the multicarrier system, and has extremely low interference.

Based on the above, this embodiment can reduce the mutual interference between the single carrier system and the multicarrier system during signal transmission, ensure that spectrum resources are shared between heterogeneous systems, and improve spectrum utilization.

The present invention further provides a signal transmitting method of a third embodiment. The third embodiment is described in detail based on the signal transmitting method disclosed in the second embodiment. This embodiment differs from the second embodiment in using that a transmit end 210 is a mobile phone, and a receive end 220 is a base station as an example.

In step S11 of this embodiment, the transmit end 210 of a single carrier system individually performs channel coding, constellation diagram mapping, multi-rate filtering, and digital-to-analog conversion sequentially on communication data to be transmitted. The transmit end 210 of a multicarrier system individually performs channel coding, constellation diagram mapping, and digital-to-analog conversion sequentially on communication data to be transmitted, and does not perform multi-rate filtering.

Subsequently, up-conversion is performed on a first signal to be transmitted by the single carrier system and a second signal to be transmitted by a multicarrier system, where digital-to-analog conversion has been performed on the first signal and the second signal, to modulate a first frequency band that corresponds to the first signal onto a second frequency band that corresponds to the second signal, and a coexistence frequency band can be obtained. Therefore, an analog signal that corresponds to the coexistence frequency band is the transmit signal of the present invention.

The present invention further provides a signal transmitting method of a fourth embodiment. The fourth embodiment is described in detail based on the signal transmitting method disclosed in the second embodiment. This embodiment differs from the second embodiment in that:

When up-conversion is performed in step S11, the first frequency band 310 that corresponds to the first signal to be transmitted by the single carrier system is set between the second frequency band 320 that corresponds to the second signal to be transmitted by the multicarrier system. That is, as shown in FIG. 4, the second frequency band 320 includes a first regional frequency band 321 and a second regional frequency band 322, and the first frequency band 320 is set between the first regional frequency band 321 and the second regional frequency band 322. In this case, a guard interval is Gap, including a first guard interval Gap1 between the first frequency band 310 and the second regional frequency band 321, and a second guard interval Gap2 between the first frequency band 310 and the second regional frequency band 322. To avoid mutual interference during reception at the receive end 230, this embodiment sets that Gap1 > 0 and Gap2 > 0, and preferably, the Gap 1 and Gap2 are set to equal values, and are both 60 Hz.

It should be understood that the parameters and values of the parameters in the foregoing embodiments are merely used to illustrate the examples. In other embodiments, a person skilled in the art may use other definitions according to actual requirements. In addition, the transmit end 210 or the receive end 230 mentioned in the full text of the present invention uses a mobile phone as an example, and is certainly not limited to a mobile phone. The transmit end 210 or the receive end 230 may be any terminal having an M2M (Machine to Machine, machine-to-machine) communication function, including a tablet computer and the like, and correspondingly, the receive end 230 or the transmit end 210 is not limited to a base station either.

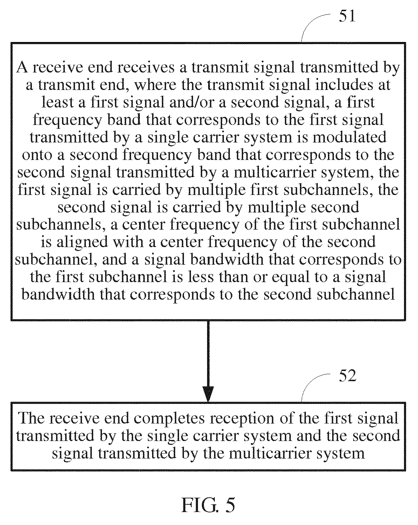

The present invention further provides a signal receiving method for coexistence of a single carrier system and a multicarrier system. This embodiment is based on the signal transmission architecture shown in FIG. 2. As shown in FIG. 5, the signal receiving method disclosed in this embodiment includes:

Step S51: A receive end receives a transmit signal transmitted by a transmit end, where the transmit signal includes at least a first signal and/or a second signal, a first frequency band that corresponds to the first signal transmitted by a single carrier system is modulated onto a second frequency band that corresponds to the second signal transmitted by a multicarrier system, the first signal is carried by multiple first subchannels, the second signal is carried by multiple second subchannels, a center frequency of the first subchannel is aligned with a center frequency of the second subchannel, and a signal bandwidth that corresponds to the first subchannel is less than or equal to a signal bandwidth that corresponds to the second subchannel.

In this embodiment, specifically, a center frequency of the first subchannel being aligned with a center frequency of the second subchannel is the same as that in step S11 of the first embodiment, that is, a spacing between center frequencies of the closest first subchannel and second subchannel that correspond to a joint of the first frequency band and the second frequency band is an integer multiple of a spacing between any two adjacent second subchannels.

Step S52: The receive end completes reception of the first signal transmitted by the single carrier system and the second signal transmitted by the multicarrier system.

In this embodiment, after receiving the transmit signal transmitted by the transmit end 210, the receive end 230 performs analog-to-digital conversion on the analog transmit signal, to obtain a corresponding digital signal. Then, down-conversion is performed on the digital signal, to reduce a signal frequency of the digital signal. At the same time, the first signal transmitted by the single carrier system and the second signal transmitted by the multicarrier system are demodulated, so that the first signal becomes a baseband signal, and the second signal becomes a frequency band signal. Then, multi-rate filtering is performed on the first signal only, to reduce a radio-frequency signal sampling rate during reception of the first signal, and finally, communication data that corresponds to the first signal transmitted by the single carrier system is obtained by means of constellation diagram parsing and channel decoding. At the same time, constellation diagram parsing and channel decoding are performed on the second signal only, to obtain communication data that corresponds to the second signal transmitted by the multicarrier system. In this embodiment, the reception of the first signal and the second signal by the receive end 230 may be construed as a reverse procedure of the foregoing signal transmitting method for coexistence of a single carrier system and a multicarrier system.

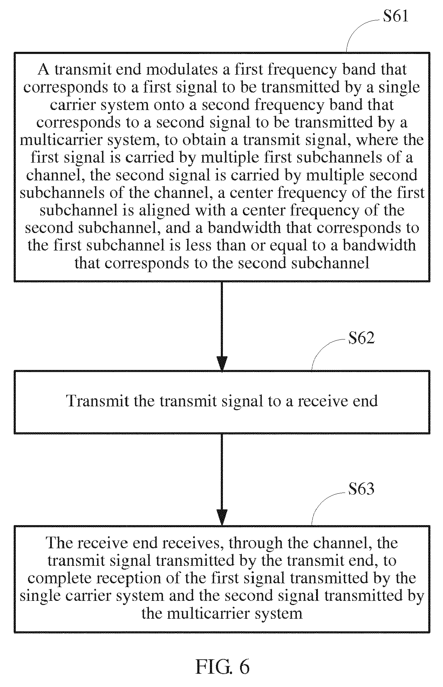

The present invention further provides a signal transmission method for coexistence of a single carrier system and a multicarrier system. Reference may be made to FIG. 6, a flowchart of a signal transmission method according to a preferable embodiment of the present invention. This embodiment is based on the signal transmission architecture shown in FIG. 2. As shown in FIG. 6, the signal transmission method of this embodiment includes:

Step S61: A transmit end 210 modulates a first frequency band that corresponds to a first signal to be transmitted by a single carrier system onto a second frequency band that corresponds to a second signal to be transmitted by a multicarrier system, to obtain a transmit signal, where the first signal is carried by multiple first subchannels 221 of a channel 220, the second signal is carried by multiple second subchannels 222 of the channel 220, a center frequency of the first subchannel 221 is aligned with a center frequency of the second subchannel 222, and a bandwidth that corresponds to the first subchannel 221 is less than or equal to a bandwidth that corresponds to the second subchannel 222.

Step S62: Transmit the transmit signal to a receive end 230.

Step S63: The receive end 230 receives, through the channel 220, the transmit signal transmitted by the transmit end 210, to complete reception of the first signal transmitted by the single carrier system and the second signal transmitted by the multicarrier system.

This embodiment may be construed as a combination of the signal transmitting method shown in FIG. 1 and the signal receiving method shown in FIG. 5. For a specific procedure and beneficial effects, refer to the foregoing, and details are not described herein again. It should be noted that, because signal transmitting and signal receiving are reverse procedures, during an actual application, terminal devices that perform the steps, for example, a multi-rate filter for multi-rate filtering, a converter for up-conversion and down-conversion, a digital-to-analog converter for digital-to-analog conversion and analog-to-digital conversion, may be shared to reduce costs.

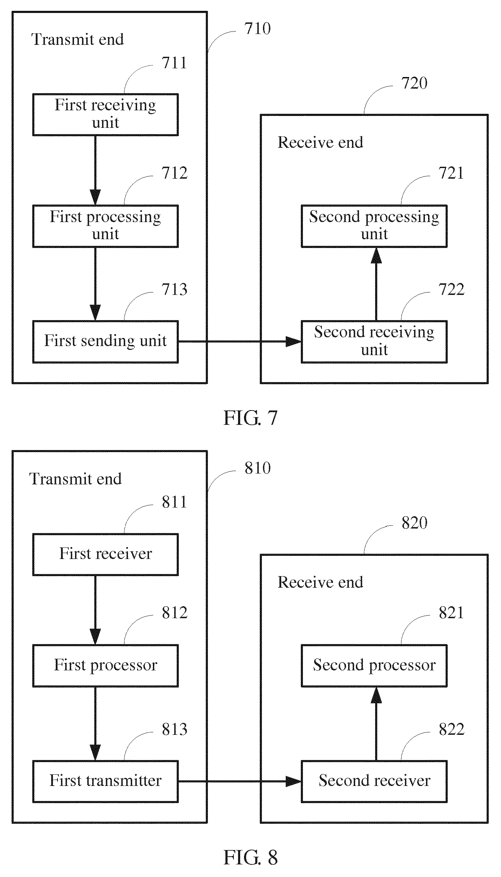

The present invention further provides a transmit end 710 and a receive end 720 based on the signal transmitting method and the signal receiving method of the foregoing embodiments. As shown in FIG. 7, the transmit end 710 of this embodiment includes a first receiving unit 711, a first processing unit 712, and a first sending unit 713, and the receive end 720 includes a second receiving unit 721 and a second processing unit 722.

The first receiving unit 711 is configured to receive communication content to be sent by a user.

The first processing unit 710 is configured to acquire, according to the communication content, a first signal to be transmitted by a single carrier system and a second signal to be transmitted by a multicarrier system, and modulate a first frequency band that corresponds to the first signal to be transmitted by the single carrier system onto a second frequency band that corresponds to the second signal to be transmitted by the multicarrier system, to obtain a transmit signal including at least the first signal and/or the second signal, where the first signal is carried by multiple first subchannels, the second signal is carried by multiple second subchannels, a center frequency of the first subchannel is aligned with a center frequency of the second subchannel, and a signal bandwidth that corresponds to the first subchannel is less than or equal to a signal bandwidth that corresponds to the second subchannel.

The first sending unit 713 is configured to transmit the transmit signal to the receive end 720.

The second receiving unit 721 is configured to receive the transmit signal transmitted by the transmit end 710.

The second processing unit 722 is configured to complete reception of the first signal transmitted by the single carrier system and the second signal transmitted by the multicarrier system.

According to the foregoing description, this embodiment can reduce mutual interference between the single carrier system and the multicarrier system when signal transmission is performed between the transmit end 710 and the receive end 720, ensure that spectrum resources are shared between heterogeneous systems, and improve spectrum utilization.

It should be noted that, as components of the transmit end 710 and the receive end 720, the foregoing modules may be or may not be physical blocks. The foregoing modules may be located in one place or may be distributed over multiple network units. The foregoing modules may be implemented in a form of hardware or may be implemented in a form of software functional blocks. Some or all of the modules may be selected according to actual requirements, to achieve objectives of the solution of this embodiment.

The present invention further provides a transmit end 810 and a receive end 820 based on the signal transmitting method and the signal receiving method of the foregoing embodiments. As shown in FIG. 8, the transmit end 810 of this embodiment includes a first receiver 811, a first processor 812, and a first transmitter 813, and the receive end 820 includes a second receiver 821 and a second processor 822.

The first receiver 811 is configured to receive communication content to be sent by a user.

The first processor 810 is configured to acquire, according to the communication content, a first signal to be transmitted by a single carrier system and a second signal to be transmitted by a multicarrier system, and modulate a first frequency band that corresponds to the first signal to be transmitted by the single carrier system onto a second frequency band that corresponds to the second signal to be transmitted by the multicarrier system, to obtain a transmit signal including at least the first signal and/or the second signal, where the first signal is carried by multiple first subchannels, the second signal is carried by multiple second subchannels, a center frequency of the first subchannel is aligned with a center frequency of the second subchannel, and a signal bandwidth that corresponds to the first subchannel is less than or equal to a signal bandwidth that corresponds to the second subchannel.

The first transmitter 813 is configured to transmit the transmit signal to the receive end 820.

The second receiver 821 is configured to receive the transmit signal transmitted by the transmit end 810.

The second processor 822 is configured to complete reception of the first signal transmitted by the single carrier system and the second signal transmitted by the multicarrier system.

In summary, the present invention designs that a transmit end modulates a first frequency band that corresponds to a first signal to be transmitted by a single carrier system onto a second frequency band that corresponds to a second signal to be transmitted by a multicarrier system, to obtain a transmit signal including at least the first signal and/or the second signal, and transmits the transmit signal to a receive end through a channel, so that the receive end completes reception of the first signal and the second signal. Center frequencies of multiple first sub-bands are aligned with center frequencies of multiple second sub-bands, and a signal bandwidth that corresponds to the first sub-band is less than or equal to a signal bandwidth that corresponds to the second sub-band, thereby reducing mutual interference between the single carrier system and the multicarrier system during signal transmission, ensuring that spectrum resources are shared between heterogeneous systems, and improving spectrum utilization.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

**Claims**

1. A signal transmitting method for coexistence of a single carrier system and a multicarrier system, wherein the method comprises:

    modulating, by a transmit end, a first frequency band that corresponds to a first signal to be transmitted by the single carrier system onto a second frequency band that corresponds to a second signal to be transmitted by the multicarrier system, to obtain a transmit signal, wherein the transmit signal comprises at least the first signal and/or the second signal, the first signal is carried by multiple first subchannels, the second signal is carried by multiple second subchannels, a spacing between a center frequency of each of the multiple first subchannel and a center frequency of each of the multiple second subchannel is an integer multiple of a spacing between two adjacent second subchannels, and a signal bandwidth that corresponds to the first subchannel is less than or equal to a signal bandwidth that corresponds to the second subchannel; and

transmitting the transmit signal to a receive end, so that the receive end completes reception of the first signal and the second signal.

2. The method according to claim 1, wherein the method comprises:

setting a guard interval between the first frequency band and the second frequency band.

3. The method according to claim 1, wherein if the transmit end is a base station and the receive end is a mobile phone, the modulating, by a transmit end, a first frequency band that corresponds to a first signal to be transmitted by the single carrier system onto a second frequency band that corresponds to a second signal to be transmitted by the multicarrier system, to obtain a transmit signal comprises:

sequentially performing, by the transmit end, channel coding, constellation diagram mapping, multi-rate filtering, and up-conversion on communication data to be sent, to acquire the first frequency band that corresponds to the first signal to be transmitted by the single carrier system, and modulating the first frequency band onto the second frequency band that corresponds to the second signal to be transmitted by the multicarrier system, to obtain a coexistence frequency band; and

performing digital-to-analog conversion on a digital signal that corresponds to the coexistence frequency band, to obtain the transmit signal.

4. The method according to claim 1, wherein if the transmit end is a mobile phone and the receive end is a base station, the modulating, by a transmit end, a first frequency band that corresponds to a first signal to be transmitted by the single carrier system onto a second frequency band that corresponds to a second signal to be transmitted by the multicarrier system, to obtain a transmit signal comprises:

separately performing, by the transmit end, channel coding, constellation diagram mapping, and digital-to-analog conversion sequentially on communication data to be sent by the single carrier system and communication data to be sent by the multicarrier system; and

performing up-conversion on the first signal to be transmitted by the single carrier system and the second signal to be transmitted by the multicarrier system, wherein digital-to-analog conversion has been performed on the first signal and the second signal, to acquire the first frequency band that corresponds to the first signal, and modulating the first frequency band onto the second frequency band that corresponds to the second signal, to obtain a coexistence frequency band and the transmit signal that corresponds to the coexistence frequency band.

5. The method according to claim 1, wherein the single carrier system is a GSM system, and the multicarrier system is an OFDM system.

6. A transmit end, comprising:

a processing unit, configured to modulate a first frequency band that corresponds to a first signal to be transmitted by a single carrier system onto a second frequency band that corresponds to a second signal to be transmitted by a multicarrier system, to obtain a transmit signal, wherein the transmit signal comprises at least the first signal and/or the second signal, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and

a sending unit, configured to receive the transmit signal obtained by the processing unit, and transmit the transmit signal to a receive end, so that the receive end completes reception of the first signal and the second signal.

7. The transmit end according to claim 6, wherein the processing unit sets a guard interval between the first frequency band and the second frequency band.

8. The transmit end according to claim 6, wherein if the transmit end is a base station and the receive end is a mobile phone, the processing unit is further configured to sequentially perform channel coding, constellation diagram mapping, multi-rate filtering, and up-conversion on communication data to be sent, to acquire the first frequency band that corresponds to the first signal to be transmitted by the single carrier system, modulate the first frequency onto the second frequency band that corresponds to the second signal, to obtain a coexistence frequency band, and perform digital-to-analog conversion on a signal that corresponds to the coexistence frequency band, to obtain the transmit signal.

9. The transmit end according to claim 6, wherein if the transmit end is a mobile phone and the receive end is a base station, the processing unit is further configured to separately perform channel coding, constellation diagram mapping, and digital-to-analog conversion sequentially on communication data to be sent by the single carrier system and communication data to be sent by the multicarrier system, perform up-conversion on the first signal and the second signal on which digital-to-analog conversion has been performed, to acquire the first frequency band that corresponds to the first signal to be transmitted by the single carrier system, and modulate the first frequency band onto the second frequency band that corresponds to the second signal to be transmitted by the multicarrier system, to obtain a coexistence frequency band and the transmit signal that corresponds to the coexistence frequency band.

10. The transmit end according to claim 6, wherein the single carrier system is a GSM system, and the multicarrier system is an OFDM system.

11. A signal receiving method for coexistence of a single carrier system and a multicarrier system, wherein the method comprises:

receiving, by a receive end, a transmit signal transmitted by a transmit end, wherein the transmit signal comprises at least a first signal and/or a second signal, a first frequency band that corresponds to the first signal transmitted by the single carrier system is modulated onto a second frequency band that corresponds to the second signal transmitted by the multicarrier system, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and
completing, by the receive end, reception of the first signal transmitted by the single carrier system and the second signal transmitted by the multicarrier system.

12. The method according to claim 11, wherein after the receiving, by a receive end, a transmit signal transmitted by a transmit end, the method comprises:

performing analog-to-digital conversion on the transmit signal, to obtain a corresponding digital signal;
performing down-conversion on the digital signal, to demodulate the first frequency band that corresponds to the first signal and the second frequency band that corresponds to the second signal, and to acquire the first signal transmitted by the single carrier system and the second signal transmitted by the multicarrier system; and
separately performing constellation diagram parsing and channel decoding sequentially on the first signal and the second signal, to obtain corresponding communication data.

13. The method according to claim 11, wherein the single carrier system is a GSM system, the multicarrier system is an OFDM system, and the transmit end is a mobile phone and the receive end is a base station, or the transmit end is a base station and the receive end is a mobile phone.

14. A receive end, comprising:

a receiving unit, configured to receive a transmit signal transmitted by a transmit end, wherein the transmit signal comprises at least a first signal and/or a second signal, a first frequency band that corresponds to the first signal transmitted by a single carrier system is modulated onto a second frequency band that corresponds to the second signal transmitted by a multicarrier system, the first signal is carried by multiple first subchannels, the second signal is carried by multiple second subchannels, a spacing between a center frequency of the first subchannel and a center frequency of the second subchannel is an integer multiple of a spacing between two adjacent second subchannels, and a signal bandwidth that corresponds to the first subchannel is less than or equal to a signal bandwidth that corresponds to the second subchannel; and

a processing unit, configured to complete, according to the transmit signal received by the receiving unit, reception of the first signal transmitted by the single carrier system and the second signal transmitted by the multicarrier system.

15. The receive end according to claim 14, wherein the processing unit is further configured to perform analog-to-digital conversion on the transmit signal, to obtain a corresponding digital signal, and perform down-conversion on the digital signal, to demodulate the first frequency band that corresponds to the first signal and the second frequency band that corresponds to the second signal, to acquire the first signal transmitted by the single carrier system and the second signal transmitted by the multicarrier system; and the processing unit is further configured to separately perform constellation diagram parsing and channel decoding sequentially on the first signal and the second signal, to obtain corresponding communication data.

16. The receive end according to claim 14, wherein the single carrier system is a GSM system, the multicarrier system is an OFDM system, and the transmit end is a mobile phone and the receive end is a base station, or the transmit end is a base station and the receive end is a mobile phone.

S11

A transmit end modulates a first frequency band that corresponds to a first signal to be transmitted by a single carrier system onto a second frequency band that corresponds to a second signal to be transmitted by a multicarrier system, to obtain a transmit signal including at least the first signal and/or the second signal, where the first signal is carried by multiple first subchannels of a channel, the second signal is carried by multiple second subchannels of the channel, a center frequency of the first subchannel is aligned with a center frequency of the second subchannel, and a bandwidth that corresponds to the first subchannel is less than or equal to a bandwidth that corresponds to the second subchannel

S12

Transmit the transmit signal to a receive end, so that the receive end completes reception of the first signal and the second signal

FIG. 1

210                          220                          230

| Transmit end | → | Channel | → | Receive end |

FIG. 2

FIG. 3

FIG. 4

51

A receive end receives a transmit signal transmitted by a transmit end, where the transmit signal includes at least a first signal and/or a second signal, a first frequency band that corresponds to the first signal transmitted by a single carrier system is modulated onto a second frequency band that corresponds to the second signal transmitted by a multicarrier system, the first signal is carried by multiple first subchannels, the second signal is carried by multiple second subchannels, a center frequency of the first subchannel is aligned with a center frequency of the second subchannel, and a signal bandwidth that corresponds to the first subchannel is less than or equal to a signal bandwidth that corresponds to the second subchannel

52

The receive end completes reception of the first signal transmitted by the single carrier system and the second signal transmitted by the multicarrier system

FIG. 5

S61

A transmit end modulates a first frequency band that corresponds to a first signal to be transmitted by a single carrier system onto a second frequency band that corresponds to a second signal to be transmitted by a multicarrier system, to obtain a transmit signal, where the first signal is carried by multiple first subchannels of a channel, the second signal is carried by multiple second subchannels of the channel, a center frequency of the first subchannel is aligned with a center frequency of the second subchannel, and a bandwidth that corresponds to the first subchannel is less than or equal to a bandwidth that corresponds to the second subchannel

S62

Transmit the transmit signal to a receive end

S63

The receive end receives, through the channel, the transmit signal transmitted by the transmit end, to complete reception of the first signal transmitted by the single carrier system and the second signal transmitted by the multicarrier system

FIG. 6

## Transmit end 710

First receiving unit 711

First processing unit 712

First sending unit 713

## Receive end 720

Second processing unit 721

Second receiving unit 722

FIG. 7

## Transmit end 810

First receiver 811

First processor 812

First transmitter 813

## Receive end 820

Second processor 821

Second receiver 822

FIG. 8

## INTERNATIONAL SEARCH REPORT

International application No.

**PCT/CN2014/086680**

### A. CLASSIFICATION OF SUBJECT MATTER

H04L 27/26 (2006.01) i; H04L 25/03 (2006.01) i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CNKI; VEN: multi-carrier, carrier, single, multi+, coexist, disturb+, transmit+, receiv+, modulate, frequency, band, gap, protect, cod+, map+, interval

### C. DOCUMENTS CONSIDERED TO BE RELEVANT

| Category* | Citation of document, with indication, where appropriate, of the relevant passages | Relevant to claim No. |
|---|---|---|
| PX | CN 103491047 A (HUAWEI TECHNOLOGIES CO., LTD.), 01 January 2014 (01.01.2014), claims 1-16 | 1-16 |
| A | CN 101119355 A (TOSHIBA CORPORATION), 06 February 2008 (06.02.2008), the whole document | 1-16 |
| A | CN 1572097 A (INTERSIL AMERICAS INC.), 26 January 2005 (26.01.2005), the whole document | 1-16 |
| A | US 2007116157 A1 (NTL INST. INF. & COMM. TECH.), 24 May 2007 (24.05.2007), the whole document | 1-16 |

☐ Further documents are listed in the continuation of Box C.        ☒ See patent family annex.

| | |
|---|---|
| \*    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 07 December 2014 (07.12.2014) | **31 December 2014 (31.12.2014)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **MAO, Yunnan** <br><br> Telephone No.: (86-10) **62089144** |

Form PCT/ISA/210 (second sheet) (July 2009)

## INTERNATIONAL SEARCH REPORT
### Information on patent family members

International application No.

**PCT/CN2014/086680**

| Patent Documents referred in the Report | Publication Date | Patent Family | Publication Date |
|---|---|---|---|
| CN 103491047 A | 01 January 2014 | None | |
| CN 101119355 A | 06 February 2008 | US 2008031376 A1 | 07 February 2008 |
| | | JP 4237784 B2 | 11 March 2009 |
| | | JP 2008042492 A | 21 February 2008 |
| CN 1572097 A | 26 January 2005 | AU 2002320258 A1 | 21 January 2003 |
| | | CN 101707809 B | 12 June 2013 |
| | | WO 03005740 A3 | 16 October 2003 |
| | | US 7394864 B2 | 01 July 2008 |
| | | CN 101707809 A | 12 May 2010 |
| | | WO 03005740 A2 | 16 January 2003 |
| | | JP 2005521270 A | 14 July 2005 |
| | | DE 10297029 T5 | 09 September 2004 |
| | | US 2008310545 A1 | 18 December 2008 |
| | | CN 100566314 C | 02 December 2009 |
| | | TW 576053 B | 11 February 2004 |
| | | US 8848812 B2 | 30 September 2014 |
| | | US 8085874 B2 | 27 December 2011 |
| | | US 2012087311 A1 | 12 April 2012 |
| | | US 2003012302 A1 | 16 January 2003 |
| US 2007116157 A1 | 24 May 2007 | US 7729458 B2 | 01 June 2010 |
| | | JP 4680036 B2 | 11 May 2011 |
| | | JP 2007134911 A | 31 May 2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310426076